# EUROPÄISCHE PATENTSCHRIFT

(11) **EP 1 084 872 B1**
(45) Veröffentlichungstag und Bekanntmachung des Hinweises auf die Patenterteilung: **09.07.2003**
(21) Anmeldenummer: 00120090.6
(22) Anmeldetag: 15.09.2000
(51) Int. Cl.: B60D 1/06, B60D 1/54, B60D 1/42

(54) **Schwenkbare Anhängerkupplung mit Steuerung**
Pivotal towing device with control
Dispositif d'attelage articulé avec commande

(30) Priorität: 15.09.1999 DE 19944100
(43) Veröffentlichungstag der Anmeldung: 21.03.2001
(73) Patentinhaber: Jaeger Cartronix GmbH, 61169 Friedberg (DE)
(72) Erfinder: Lüttmer, Hanno, 24837 Schleswig (DE); Grossmann, Ralf, 24837 Schleswig (DE)
(74) Vertreter: KEIL & SCHAAFHAUSEN

(56) Entgegenhaltungen:
- DE-A- 19 612 961
- DE-A- 19 711 535
- US-A- 4 744 583
- US-A- 5 677 667

## Beschreibung

Die Erfindung betrifft eine Anhängerkupplung zur Anbringung an Fahrzeugen mit einem Motor nach dem in der DE 19612961 A offenbarten Oberbegriff des Anspruchs 1. Dabei weist die Anhängerkupplung eine Kugelstange auf, und die Kugelstange ist zwischen einer Ruhestellung und einer verriegelten Betriebsstellung verfahrbar ausgebildet.

Der Anhängerkupplung ist mindestens ein, vorzugsweise elektromotorischer Antrieb zugeordnet, wobei der Antrieb eine Wirkverbindung zu einer, vorzugsweise elektronischen, Steuerung aufweist.

Solche Anhängerkupplungen sind zum Beispiel aus der DE 197 11 535 bekannt. Hier wird eine motorisch zwischen einer Betriebsstellung und einer Ruhestellung verstellbare Anhängerkupplung beschrieben, die gegen Fehlbedienungen geschützt ist.

Die Sicherheit der Fahrzeuge ist ständig erhöht worden, so daß man heute dem Standard der Fahrzeuge vertrauen kann. Außenliegende Teile wie Anhängerkupplungen unterliegen jedoch im Allgemeinen einer sehr hohen Beanspruchung. Sie sind durch ständige Vibrationen, Staub, Feuchtigkeit und durch andere Umweltweinflüsse sowie durch Überbelastung einem großen Verschleiß ausgesetzt. Die möglichen Folgen bei Versagen einer Anhängerkupplung sind offensichtlich. Aus diesem Grund sind gerade bei motorisch verfahrbaren Anhängerkupplungen Sicherheitsvorkehrungen sehr wichtig. Bei den meisten Ahhängerkupplungen muß die richtige Funktion aber noch vom Fahrzeughalter überprüft werden. Es ist allgemein bekannt, daß dies nur bei sehr gewissenhaften Menschen der Fall ist, aber in der Regel einfach blind der Technik vertraut wird.

Ferner ist aus der DE 196 12 961 A1 eine Anhängerkupplung für Kraftfahrzeuge mit Kupplungshals und Kupplungskugel sowie einem motorischen Antrieb bekannt, durch welchen der Kugelhals mit der Kupplungskugel von einer Arbeitsstellung in eine Ruhestellung und umgekehrt bewegt werden kann. Eine Steuerung lässt dabei entweder ein Bewegen des Kugelhalses oder ein Fahren des Kraftfahrzeuges zu, wobei die Steuerung den Antrieb für das Bewegen des Kugelhalses dann blockiert, wenn der Motor des Kraftfahrzeuges läuft, und/oder die Steuerung ein Laufen des Motors des Kraftfahrzeugs nur dann zulässt, wenn der Kugelhals in der Ruhestellung oder der verriegelbaren Arbeitsstellung steht. Zur Betätigung der Steuerung ist ein Tastschalter vorgesehen, der ein logisches Signal an eine Logikeinheit der Steuerung weiterleitet. Diese detektiert daraufhin den Zustand des Kupplungshalses und des Kraftfahrzeugmotors und steuert abhängig von diesen Informationen den Antrieb zum Bewegen des Kugelhalses.

Aufgabe dieser Erfindung ist es daher, eine Steuerung eine für motorisch verfahrbare Anhängerkupplung vorzugeben, die ein unbefugtes oder unbeabsichtigtes Verfahren der Anhängerkupplung verhindert.

Die Aufgabe der Erfindung wird durch die Merkmale des Anspruchs 1 gelöst. Die Steuerung läßt einen Lauf des Motors nur zu, wenn sich die Anhängerkupplung in der Ruhestellung oder in der verriegelten Betriebsstellung befindet, und/oder einen Lauf des Antriebes nur zu, wenn der Motor nicht läuft.

Die Steuerung läßt ein Starten des KFZ-Motores nur zu, wenn die Anhängerkupplung entweder in der eingefahrenen Stellung, also der Ruhestellung ist oder sich in der ausgefahrenen, verriegelten Betriebsstellung befindet. Dies trägt sowohl zur Sicherheit im Straßenverkehr bei als auch verhindert es erhebliche Schäden am KFZ.

Ferner ist vorgesehen, daß ein Schlüsselschalter vorgesehen ist, der aus mindestens zwei Schaltebenen besteht, vorzugsweise zwei rastenden Schaltebenen und einer tastenden Schaltebene. Die erste Schalterebene liegt in Reihe zum Endlagenschalter, der im Falle der erfolgreichen Verriegelung nach dem Ausfahren den Kontakt schließt. Ist der Schalter eingeschaltet und der Endlagenschalter aktiv, so wird der Logikeinheit das Signal für OK geliefert. Die zweite Schalterebene schließt bei Betätigung in Richtung Bedienungstaster den Motorstromkreis des Antriebs (bei Einfahren an die + -Polarität führende Leitung). Diese Ausführungsform ist besonders sicher und für den Benutzer fehlerfrei zu bedienen.

Alternativ dazu ist vorgesehen, daß ein elektronischer Schalter vorgesehen ist, der die Schaltebenen mittels einer elektronischen Steuerung schaltend ausgebildet ist. Dieser Schalter oder Taster würde entweder über Tastendruckkombinationen oder die Tastendruckdauer durch eine Elektronik die jeweiligen Schaltzustände generieren. Eine Anzeige im Schalter integriert würde die Bedienerfreundlichkeit um ein weiteres erhöhen. Eine fehlerhafte Bedienung ist dadurch nahezu ausgeschlossen. Außerdem ist diese Ausführungsform sehr platzsparend unterzubringen.

In einer ersten Ausführungsform ist vorgesehen, daß die Steuerung eine Logikeinheit zur Steuerung des Antriebs und/oder zum Auswerten von Signalen aufweist. In modernen KFZ ist Benutzerfreundlichkeit und Sicherheit eine hoch geschriebene Anforderung. Deshalb soll eventuellen Sicherheitsrisiken vorgebeugt werden sowie Informationen über Funktionszustände im Cockpit visualisiert werden. Das Herz der vorliegenden Erfindung ist die Logikeinheit, die aus einem getakteten Rechenwerk bestehen kann. Abhängig von den äußeren Signalanlagen werden die Ausgangssignale für Einfahren und Ausfahren generiert und steuern den Antrieb der Anhängerkupplung. Die Ansteuerung des Motors soll nur unter den folgenden Bedingungen erfolgen:
- verriegelbarer Kippschalter geschaltet
- Zündschlüssel in Grundstellung (ganz links), oder abgezogen
- Anhängerkupplung in der Ruhestellung oder der verriegelten Betriebsstellung

In einer weiteren Ausführungsform ist vorgesehen, daß ein Filter für Wechselspannungsanteile aus dem Bordspannungsnetz vorgesehen ist, der für die Logikeinheit ein Motorbetriebssignal des Motors generiert. Die Information, ob der Motor des KFZ läuft, ist überraschend einfach durch Herausfiltern von Wechselspannungsanteilen aus dem Bordspannungsnetz, welche durch die Lichtmaschine beim Laden der Batterie erzeugt werden, zu gewinnen. Diese kann dann an die Logikeinheit weitergegeben und entsprechend ausgewertet, angezeigt und weitergeleitet werden.

In einer weiteren Ausführungsform ist vorgesehen, daß mindestens ein Drehmomentdetektor vorgesehen ist, welcher ein Drehmomentsignal für das Überschreiten eines vorbestimmten Schwellenwertes erzeugend ausgebildet ist, vorzugsweise durch Messung der Stromaufnahme des Antriebs. Hier ist besonders vorteilhaft, daß der Schwellenwert, beispielsweise eine Stromgrenze des elektromotorischen Antriebs von 6A, als Abschaltinformation an die Logikeinheit weitergegeben wird. Es können vorzugsweise zwei Drehmomentdetektoren verwendet werden, für die auch unterschiedliche Schwellenwerte eingestellt werden können, nämlich für das Einfahren und das Ausfahren der Anhängerkupplung.

In einer weiteren Ausführungsform ist vorgesehen, daß mindestens ein Umkehrpunktsensor vorgesehen ist, der ein Endlagensignal, insbesondere ein Signal für die Ruhestellung und die verriegelte Betriebsstellung, erzeugend ausgebildet ist. Die Erkennung der Positionen der Ruhestellung und der Betriebsstellung kann über Mikrotaster bzw. Endlagenschalter erfolgen, die Signale bei eingefahrener und verriegelter ausgefahrener Kugelstange an die Logikeinheit weitergeben.

In einer weiteren Ausführungsform ist vorgesehen, daß ein Polwandler vorgesehen ist, der die Polarität des Antriebs steuert. Der Polwandler ändert die Drehrichtung bei Erreichen des jeweiligen Umkehrpunktes durch einen elektrischen Umpolvorgang bei einer beabsichtigten Wiederbetätigung des Aus- oder Einfahrens. Die Schaltung ist verpolungssicher ausgebildet.

In einer weiteren Ausgestaltungsform ist vorgesehen, daß eine erste der rastenden Schalterebenen in Reihe zum Mikroschalter liegt und an die Logikeinheit ein OK-Signal gibt, wenn die Schaltebene eingerastet ist und der Mikroschalter geschlossen ist. Durch diese Ausführungsform wird eine zusätzliche Kontrolle der erfolgreichen Verriegelung ermöglicht. Falls die Verriegelung nicht funktioniert, wird die Schaltung von der Logikeinheit nicht freigegeben.

In einer weiteren Ausgestaltungsform ist vorgesehen, daß eine zweite der rastenden Schaltebenen einen Antriebsmotorstromkreis schließend ausgebildet ist.

In einer weiteren Ausgestaltungsform ist vorgesehen, daß ein Resetschalter vorgesehen ist, der den Mikroschalter umgeht und die Anhängerkupplung in die Ruhestellung zurückfährt. Falls eine Fehlfunktion vorliegt, kann durch diesen zusätzlichen Schalter das System aus jeder Stellung in die Ausgangslage gebracht werden. Der Reset-Schalter soll den Endlagenschlater elektrisch überbrücken, im Gehäuse untergebracht sein und bewußt auf Anweisung mit Hilfsmittel bedienbar sein.

Die Schaltzustände bzw. Funktionszustände sollen wie folgt angezeigt werden:
- Betriebszustand "Verfahren" durch blinkende LED
- "Verriegelung abgeschlossen, zum Anhängerbetrieb bereit" durch Verlöschen der blinkenden LED und ein Aufleuchten einer anderen LED oder derselben LED in einer anderen Farbe nach Erreichen des Sperrzustandes.

Die LED-Anzeige soll gut sichtbar im Bedienerfeld des Steuerungsgehäuses angebracht sein und darf nicht zu Unsicherheit oder gar Verwirrung des Bedieners führen.

Optinal ist eine akustische Warneinrichtung (Piezo-Summer) vorzusehen.

Die Logikeinheit ist inaktiv bis zum Steuerbefehl und deaktiviert sich nach Erreichen der definierten Stellung bzw. abgeschlossenen Verriegelung. Dies wird durch die Unterbrechung der Stromversorgung in der ersten Schalterebene und durch Unterbrechung des Mirkroschalters erreicht. Erst wenn der Antrieb in Endlage und die erste Schalterebene eingerastet ist, wird die Logikeinheit mit Strom versorgt.

In einer weiteren Ausgestaltungsform ist vorgesehen, daß in einer Steckerverbindung zwischen dem Kraftfahrzeug und dem Anhänger ein Kontakt ein Steckersignal zur Logikeinheit gibt, ob die Steckerverbindung offen oder geschlossen ist. Falls die Steckerverbindung zusammengesteckt ist, ist möglicherweise ein Fahrbetrieb beabsichtigt. Somit ist hier zusätzliche Sicherheit erreicht. Weiterhin kann diese Information zur Funktionsanzeige dienen, ob die Steckerverbindung geschlossen ist oder ob es vergessen worden ist, den Stecker zu verbinden.

Die Erfindung wird in einer bevorzugten Ausführungsform unter Bezugnahme auf Zeichnungen näher beschrieben, wobei weitere vorteilhafte Einzelheiten den Figuren zu entnehmen sind. Funktionsmäßig gleiche Teile sind dabei mit denselben Bezugszeichen versehen.

Die Zeichnungen zeigen im einzelnen:

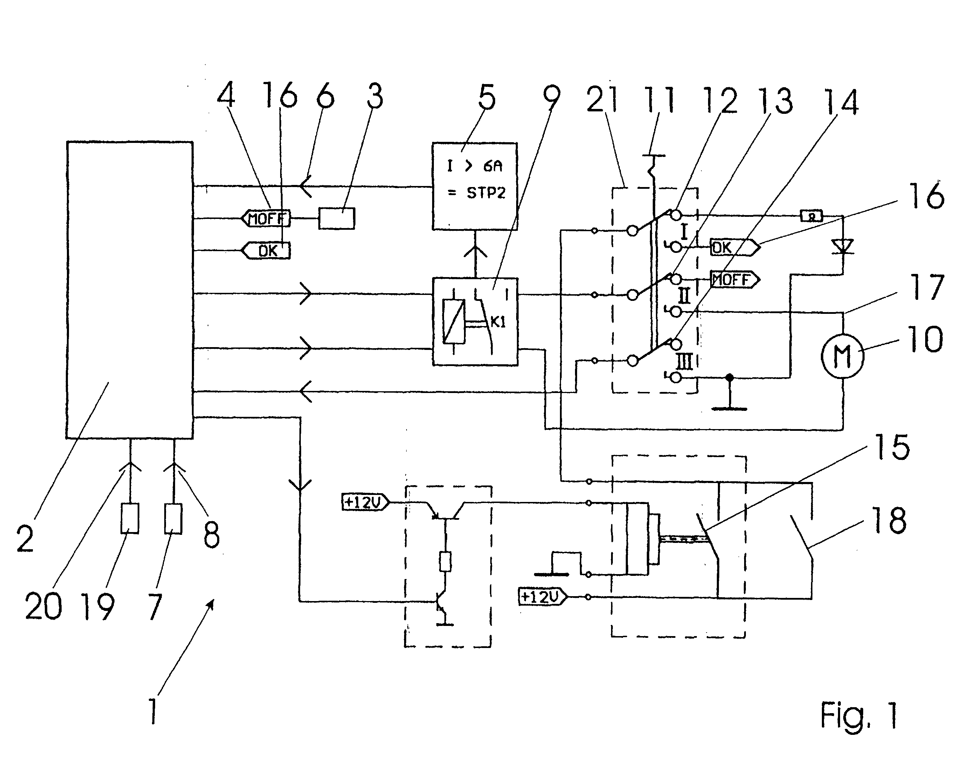

- Fig. 1:: Funktionsdiagramm der Steuerung

Die erfindungsgemäße Anhängerkupplung wird von einer in Figur 1 dargestellten Ausführungsform der Steuerung 1 geschaltet. Zentraler Baustein ist die Logikeinheit 2 auf der linken Seite der Figur. Sie steuert den Antrieb 10 der Anhängerkupplung, den Sie über einen Polumwandler 9 in beiden Richtungen antreiben kann. Dieser Motorstromkreis 17 des Antriebs kann durch einen Schlüsselschalter 11 in der zweiten Schalterebene 13 unterbrochen und geschlossen werden.

Des weiteren kann der Vorgang des Verfahrens auch durch den Drehmomentdetektor 5 beendet werden, wenn nämlich ein voreingestellter Schwellenwert überschritten wird. Dieser kann zum Beispiel durch die Stromaufnahme des Antriebsmotors auf 6 Ampere begrenzt sein. Außerdem kann für das Ein- und Ausfahren jeweils ein eigener Drehmomentdetektor vorgesehen werden. Dies wurde hier aus Gründen der Übersichtlichkeit nicht in der Figur berücksichtigt.

Für die Sicherheitsvorkehrungen werden von der Logikeinheit 2 unterschiedliche Signale ausgewertet, die jeweils von verschiedenen Bauteilen abgefragt werden.

Die Anhängerkupplung soll nicht verfahrbar sein, wenn der Motor des Kraftfahrzeuges läuft. Aus diesem Grund kann ein Filter für Wechselspannungsanteile 3 vorgesehen werden, der ein Motorbetriebssignal 4 an die Logikeinheit 2 gibt. Die Wechselspannungsanteile aus dem Bordspannungsnetz treten beim Lauf des Motors durch den Ladevorgang der Batterie des Kraftfahrzeuges durch die Lichtmaschine auf.

Ebenfalls soll die Anhängerkupplung nur ausgehend von der Ruhestellung oder Betriebsstellung verfahren werden. Hierfür ist ein Mikroschalter 15 vorgesehen. Nur wenn dieser geschlossen ist, wird die erste Schalterebene mit Spannung versorgt. Zusätzlich ist noch ein Hubmagnet vorgesehen, mit dem ein zusätzlicher Formschluß für die Verriegelung gebildet werden kann. Der Mikroschalter kann an beliebigen Stellen, aber möglichst wassergeschützt, angebracht werden.

Zur Erkennung eines oberen und eines unteren Umkehrpunktes der Kugelstange ist mindestens ein Umkehrpunktsensor 7 vorgesehen, der ein Endlagensignal 8 an die Logikeinheit weitergeben kann und diese somit weiß, ob die Kugelstange in der Ruhestellung, der verriegelten Betriebsstellung oder dazwischen ist.

Eine weitere Sicherheitsvorkehrung ist ein Kontakt 19 in der Steckerverbindung zwischen dem Kraftfahrzeug und dem Anhänger, der ein Steckersignal 20 an die Logikeinheit 2 gibt. Dadurch kann die Logikeinheit auswerten, ob ein Fahrbetrieb des Anhängers beabsichtigt ist oder nicht.

Falls die Anhängerkupplung aus unvorhersehbarem Grund einmal während des Verfahrens stehenbleibt oder am Verfahren gehindert wird, kann durch einen Reset-Schalter 18 der Endlagenschalter 15 überbrückt werden und die Kugelstange trotzdem in die Ausgangslage verfahren werden.

Der Vorgang des Verfahrens der Kugelstange wird von der Logikeinheit 2 nur dann ausgelöst, wenn ein Taster der dritten Schaltebene 14 gedrückt wird. Dieser gibt unter der Erfüllung der vorherigen Bedingungen das Signal für das Verfahren der Kugelstange.

Die drei Schaltebenen und der Schlüsselschalter 11, 12, 13, 14 können durch einen elektronischen Schalter ersetzt werden, der nur noch mittels eines Tasters bedient werden müßte. Ebenfalls in diesen Taster könnte eine Anzeige des Bedienungszustandes integriert sein.

### Bezugszeichenliste

- 1:: Steuerung
- 2:: Logikeinheit
- 3:: Filter für Wechselspannungsanteile
- 4:: Motorbetriebssignal
- 5:: Drehmomentdetektor
- 6:: Drehmomentsignal
- 7:: Umkehrpunktsensor
- 8:: Endlagensignal
- 9:: Polwandler
- 10:: Antrieb
- 11:: Schlüsselschalter
- 12:: erste, rastende Schaltebene
- 13:: zweite, rastende Schaltebene
- 14:: dritte, tastende Schaltebene
- 15:: Mikroschalter
- 16:: OK-Signal
- 17:: Motorstromkreis des Antriebs
- 18:: Resetschalter
- 19:: Kontakt
- 20:: Steckersignal

## Patentansprüche

1. Anhängerkupplung zur Anbringung an Fahrzeugen mit einem Motor, wobei die Anhängerkupplung eine Kugelstange aufweist und die Kugelstange zwischen einer Ruhestellung und einer verriegelten Betriebsstellung verfahrbar ausgebildet ist und der Anhängerkupplung mindestens ein, vorzugsweise elektromotorischer, Antrieb (10) zugeordnet ist, wobei der Antrieb (10) eine Wirkverbindung zu einer, vorzugsweise elektronischen, Steuerung (1) aufweist und wobei die Steuerung (1) einen Lauf des Motors nur zuläßt, wenn sich die Anhängerkupplung in der Ruhestellung oder in der verriegelten Betriebsstellung befindet, und/oder wobei die Steuerung (1) einen Lauf des Antriebes (10) nur zuläßt, wenn der Motor nicht läuft, **dadurch gekennzeichnet, daß** ein Schalter zum Verfahren der Kugelstange vorgesehen ist, der aus mindestens zwei Schaltebenen besteht, und daß der Schalter als Schlüsselschalter (11) oder als die Schaltebenen mittels einer elektronischen Steuerung schaltender elektronischer Schalter (21) ausgebildet ist.

2. Anhängerkupplung für Kraftfahrzeuge nach Anspruch 1, **dadurch gekennzeichnet, daß** die Steuerung (1) eine Logikeinheit (2) zur Steuerung des Antriebs (10) und/oder zum Auswerten von Signalen aufweist.

3. Anhängerkupplung für Kraftfahrzeuge nach Anspruch 2,
**dadurch gekennzeichnet, daß** ein Filter für Wechselspannungsanteile (3) aus dem Bordspannungsnetz vorgesehen ist, der für die Logikeinheit (2) ein Motorbetriebssignal (4) des Motors generiert.

4. Anhängerkupplung für Kraftfahrzeuge nach Anspruch 2 oder 3, **dadurch gekennzeichnet, daß** mindestens ein Drehmomentdetektor (5) vorgesehen ist, welcher für die Logikeinheit (2) ein Drehmomentsignal (6) des Antriebs (10) für das Überschreiten eines vorbestimmten Schwellenwertes erzeugt, vorzugsweise durch Messung der Stromaufnahme des Antriebs (10).

5. Anhängerkupplung für Kraftfahrzeuge nach einem der Ansprüche 2 bis 4, **dadurch gekennzeichnet, daß** mindestens ein Umkehrpunktsensor (7) vorgesehen ist, der für die Logikeinheit (2) ein Endlagensignal (8) der Kugelstange, insbesondere ein Signal für die Ruhestellung und die verriegelte Betriebsstellung, gibt.

6. Anhängerkupplung für Kraftfahrzeuge nach einem der vorherigen Ansprüche, **dadurch gekennzeichnet, daß** ein Polwandler (9) vorgesehen ist, der die Polarität des Antriebs (10) nach Erreichen der Ruhestellung oder der Betriebsstellung steuert.

7. Anhängerkupplung für Kraftfahrzeuge nach einem der vorherigen Ansprüche, **dadurch gekennzeichnet, daß** der Schalter zwei rastende Schaltebenen (12, 13) und eine tastende Schaltebene (14) aufweist.

8. Anhängerkupplung für Kraftfahrzeuge nach Anspruch 2 und 7, **dadurch gekennzeichnet, daß** eine erste der rastenden Schaltebenen (12) in Reihe zu einem Mikroschalter (15) liegt und an die Logikeinheit ein OK-Signal (16) gibt, wenn die Schaltebene (12) eingerastet ist und der Mikroschalter (15) geschlossen ist.

9. Anhängerkupplung für Kraftfahrzeuge nach Anspruch 8, **dadurch gekennzeichnet, daß** ein Resetschalter (18) vorgesehen ist, der den Mikroschalter (15) umgeht und die Anhängerkupplung in die Ruhestellung zurückfährt.

10. Anhängerkupplung für Kraftfahrzeuge nach einem der Ansprüche 7 bis 9, **dadurch gekennzeichnet, daß** eine zweite der rastenden Schaltebenen (13) einen Motorstromkreis (17) des Antriebs (10) schließend ausgebildet ist.

11. Anhängerkupplung für Kraftfahrzeuge nach einem der Ansprüche 2 bis 10, **dadurch gekennzeichnet, daß** in einer Steckerverbindung zwischen dem Kraftfahrzeug und dem Anhänger ein Kontakt (19) ein Steckersignal (20) zur Logikeinheit (2) gibt, ob die Steckerverbindung offen oder geschlossen ist.

## Claims

1. Trailer coupling to be fixed to vehicles having a motor, the trailer coupling comprising a ball rod and the ball rod being movable between a rest position and a locked operating position and the trailer coupling having been allocated a preferably electromotive drive (10), said drive (10) having an effective connection to a preferably electronic control (1), the control (1) only permitting running of the motor if the trailer coupling is in its rest position or in a locked operating position, and/or the control (1) only permitting running of the drive (10) if the motor is not running, **characterized in that** a switch for moving the ball rod is provided consisting of at least two switch levels, and that the switch is formed as a key switch (11) or as an electronic switch (21) switching the switch levels by means of an electronic control.

2. Trailer coupling for motor vehicles according to claim 1, **characterized in that** the control (1) comprises a logic unit (2) for controlling the drive (10) and/or analysing signals.

3. Trailer coupling for motor vehicles according to claim 2, **characterized in that** a filter for alternating voltage shares (3) is provided from the board tension net generating a motor operation signal (4) of the motor for the logic unit (2).

4. Trailer coupling for motor vehicles according to claim 2 or 3, **characterized in that** at least one torque detector (5) is provided which generates a torque signal (6) of the drive (10) for exceeding a pre-determined threshhold value to the logic unit (2), preferably by measuring the current reception of the drive (10).

5. Trailer coupling for vehicles according to one of claims 2 to 4, **characterized in that** at least one return point sensor (7) is provided emitting an end position signal (8) of the ball rod, particularly a signal for the rest position and the locked operating position, to the logic unit (2).

6. Trailer coupling for motor vehicles according to one of the previous claims, **characterized in that** a pole changer (9) is provided controlling the polarity of the drive (10) after reaching the rest position or the operating position.

7. Trailer coupling for motor vehicles according to one of the previous claims, **characterized in that** the switch comprises two locking switch levels (12, 13) and a sensing switch level (14).

8. Trailer coupling for motor vehicles according to claim 2 and 7, **characterized in that** a first of the locking switch levels (12) lies in series with a micro switch (15) and transmits an OK signal (16) to the logic unit when the switch level (12) has been locked and the micro switch has been closed.

9. Trailer coupling for motor vehicles according-to claim 8, **characterized in that** a reset switch (18) is provided bypassing the micro switch (15) and turning the trailer coupling into its rest position.

10. Trailer coupling for motor vehicles according to one of claims 7 to 9, **characterized in that** a second of the locking switch levels (13) is formed to close a motor electric circuit (17) of the drive (10).

11. Trailer coupling for motor vehicles according to one of claims 2 to 10, **characterized in that** in a plug-in connection between the motor vehicle and the trailer a contact (19) transmits a plug-in signal (20) to the logic unit (2) indicating whether the plug-in connection is open or closed.

## Revendications

1. Dispositif d'attelage à installer sur des véhicules motorisés, le dispositif d'attelage étant muni d'une attache remorque à boule, l'attache remorque à boule étant formée de sorte à pouvoir être mobile entre une position de repos et une position de travail verrouillée et au moins un dispositif d'entraînement (10), de préférence par électromoteur, étant associé au dispositif d'attelage, le dispositif d'entraînement (10) étant muni d'une liaison active avec d'une commande (1), de préférence électronique, et la commande (1) n'autorisant la marche du moteur uniquement lorsque le dispositif d'attelage est en position de repos ou en position de travail verrouillée, et / ou la commande (1) n'autorisant la marche du dispositif d'entraînement (10) que lorsque le moteur est arrêté, **caractérisé en ce qu**'il est prévu un interrupteur pour déplacer l'attache remorque à boule qui se compose d'au moins deux niveaux d'interruption, et en ce que l'interrupteur est conformé comme un interrupteur à clé (11) ou comme un interrupteur (21) électronique interrompant les niveaux d'interruption au moyen d'une commande électronique.

2. Dispositif d'attelage pour véhicules motorisés selon la revendication 1, **caractérisé en ce que** la commande (1) est équipée d'une unité logique (2) pour commander le dispositif d'entraînement (10) et / ou pour exploiter des signaux.

3. Dispositif d'attelage pour véhicules motorisés selon la revendication 2, **caractérisé en ce qu**'un filtre de composante de tension alternative provenant du réseau de tension de bord est prévu et génère un signal de fonctionnement du moteur pour l'unité logique (2).

4. Dispositif d'attelage pour véhicules motorisés selon la revendication 2 ou 3, c**aractérisé en ce qu**'il est prévu au moins un détecteur de couple (5) qui génère pour l'unité logique un signal de couple (6) du dispositif d'entraînement (10) pour le dépassement d'une valeur de seuil prédéterminée, de préférence par mesure de la consommation de courant par le dispositif d'entraînement (10).

5. Dispositif d'attelage pour véhicules motorisés selon l'une des revendications 2 à 4, **caractérisé en ce qu**'il est prévu au moins un détecteur de point de rebroussement (7) qui donne à l'unité logique (2) un signal de fin de course (8) de l'attache remorque à boule, notamment un signal pour la position de repos et la position d'utilisation verrouillée.

6. Dispositif d'attelage pour véhicules motorisés selon l'une des revendications précédentes, **caractérisé en ce qu**'il est prévu un transducteur de pôles (9) qui commande la polarité du dispositif d'entraînement (10) après que la position de repos ou la position d'utilisation a été atteinte.

7. Dispositif d'attelage pour véhicules motorisés selon l'une des revendications précédentes, **caractérisé en ce que** l'interrupteur est muni de deux niveaux d'interruption à enclenchement (12, 13) et un niveau d'interruption à contact (14).

8. Dispositif d'attelage pour véhicules motorisés selon la revendication 2 et 7, **caractérisé en ce qu**'un premier des niveaux d'interruption à enclenchement (12) est branché en série avec un microcommutateur (15) et fournit à l'unité logique un signal OK (16) lorsque le niveau d'interruption est enclenché et que le microcommutateur (15) est fermé.

9. Dispositif d'attelage pour véhicules motorisés selon la revendication 8, **caractérisé en ce qu**'il est prévu un commutateur de remise à zéro (18) qui contourne le microcommutateur (15) et ramène le dispositif d'attelage en position de repos.

10. Dispositif d'attelage pour véhicules motorisés selon l'une des revendications 7 à 9, **caractérisé en ce qu**'un second des niveaux d'interruption à enclenchement (13) est formé pour fermer un circuit électrique moteur (17) du dispositif d'entraînement (10).

11. Dispositif d'attelage pour véhicules automobiles selon l'une des revendications 2 à 10, **caractérisé en ce qu**'un contact (19) dans un connecteur entre le véhicule motorisé et la remorque fournit un signal de contact à l'unité logique (2) indiquant si le connecteur est ouvert ou fermé.
